Europäisches Patentamt

European Patent Office

Office européen des brevets

(19)

(11) Veröffentlichungsnummer: **0 176 061**
**B1**

(12) **EUROPÄISCHE PATENTSCHRIFT**

(45) Veröffentlichungstag der Patentschrift: **09.01.91**

(21) Anmeldenummer: **85111971.9**

(22) Anmeldetag: **21.09.85**

(51) Int. Cl.$^5$: **C 08 L 71/12,** C 08 L 25/04,
C 08 L 25/10, C 08 L 53/02,
C 08 L 51/06

(54) **Thermoplastische Formmassen.**

(30) Priorität: **24.09.84 DE 3434978**

(43) Veröffentlichungstag der Anmeldung:
**02.04.86 Patentblatt 86/14**

(45) Bekanntmachung des Hinweises auf die
Patenterteilung:
**09.01.91 Patentblatt 91/02**

(84) Benannte Vertragsstaaten:
**BE DE FR GB IT NL**

(56) Entgegenhaltungen:
**EP-A-0 048 397**
**EP-A-0 095 098**
**DE-A-2 750 242**

(73) Patentinhaber: **BASF Aktiengesellschaft
Carl-Bosch-Strasse 38
D-6700 Ludwigshafen (DE)**

(72) Erfinder: **Hambrecht, Juergen, Dr.
Werderstrasse 30
D-6900 Heidelberg (DE)**
Erfinder: **Gerberding, Karl, Dr.
In der Dreispitz 9
D-6706 Wachenheim (DE)**
Erfinder: **Bronstert, Klaus, Dr.
Gartenstrasse 26
D-6719 Carlsberg (DE)**
Erfinder: **Echte, Adolf, Dr.
Leuschnerstrasse 42
D-6700 Ludwigshafen (DE)**
Erfinder: **Schmitt, Burghard, Dr.
Braeunigstrasse 12
D-6520 Worms 24 (DE)**
Erfinder: **Brandstetter, Franz, Dr.
Ritterbueschel 45
D-6730 Neustadt (DE)**

**Die Akte enthält technische Angaben, die nach
dem Eingang der Anmeldung eingereicht
wurden und die nicht in dieser Patentschrift
enthalten sind.**

EP 0 176 061 B1

**Beschreibung**

Die Erfindung betrifft neue thermoplastische Formmassen, die Polyphenylenether oder Gemische aus Polyphenylenethern und Styrolpolymerisaten und zur Verbesserung der Schlagzähigkeit und des Verarbeitungsverhaltens statistisch aufgebaute, hydrierte Blockpolymerisate enthalten.

Polyphenylenether sind dem Fachmann als eine Klasse von Thermoplasten bekannt, die eine Reihe von hervorragenden physikalischen Eigenschaften besitzen. Sie können durch oxidative und nichtoxidative Verfahren hergestellt werden, wie dies beispielsweise in den US—PS—3 306 874, 3 306 875, 3 257 357 und 3 257 358 beschrieben worden ist. Es ist weiterhin bekannt, daß viele der Eigenschaften der Polyphenylenether, beispielsweise die Leichtigkeit der Verarbeitung, die Schlagfestigkeit und die Lösungsmittelbeständigkeit, verbessert werden können, indem man diese Harze mit anderen Harzen, wie z.B. mit Polystyrol, kombiniert. So sind z.B. thermoplastische Massen, die sich zur Herstellung von Formteilen eignen und die schlagzäh modifizierte Styrolpolymerisate und Polyphenylenether enthalten aus den US—PS—3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend. Wünschenswert sind jedoch für spezielle Anwendungen eine verbesserte Schlagzähigkeit und beim Einsatz im Großspritzguß eine verbesserte Verarbeitbarkeit, insbesondere eine höhere Fließfähigkeit.

Zur Verbesserung der Schlagzähigkeit ist verschiedentlich vorgeschlagen worden, elastomere Blockmischpolymerisate zuzusetzen. Zum Stand der Technik nennen wir: (1) DE—AS—1 932 234, (2) DE—AS—2 000 118, (3) DE—OS—2 255 930, (4) DE—OS—2 750 515, (5) DE—OS—2 434 848, (6) DE—OS—3 038 551, (7) EP—80 666, (8) WO—83/01 254.

In (1)—(3) wird die Zugabe von unterschiedlich aufgebauten, vornehmlich aus vinylaromatischen und konjugierten Dienblöcken bestehenden Blockcopolymerisaten beschrieben. Diese Mischungen zeichnen sich durch eine verbesserte Schlagzähigkeit aus. Aufgrund der bei hohen Verarbeitungstemperaturen auftretenden Vernetzung dieser Blockcopolymerisate ist die Wirkung der zugesetzten Blockcopolymerisate nicht befriedigend. In der Folge ist deshalb in (4)—(8) vorgeschlagen worden, hydrierte Blockcopolymerisate oder deren Mischung mit der nicht hydrierten Vorstufe als Schlagzähmodifizierungsmittel einzusetzen. Im wesentlichen werden dabei hydrierte Block- oder Teleblockcopolymerisate, bestehend aus einem vinylaromatischen Kohlenwasserstoffblock und einem hydrierten Blockteil, das durch Polymerisation eines konjugierten Diens, wie z.B. Butadien oder Isopren erhalten wurde, eingesetzt. Die Schlagzähigkeit dieser Polymermischungen ist weiter verbessert. Gleichzeitig wird jedoch durch Zugabe der Blockcopolymerisate die Wärmeformbeständigkeit abgesenkt. Nicht befriedigend bleibt das Verarbeitungsverhalten der Mischungen insbesondere im Großspirtzguß.

Aufgabe der vorliegenden Erfindung war es deshalb, thermoplastische Formmassen auf der Grundlage von Polyphenylenether oder Mischung aus Polyphenylenethern und Styrolpolymerisaten zu schaffen, die zu Formteilen mit einer verbesserten Schlagzähigkeit bei gleichzeitig wenig veränderter hoher Wärmeformbeständigkeit verarbeitet werden können und deren Verarbeitungsverhalten wesentlich verbessert ist.

Diese Aufgabe wird erfindungsgemäß durch thermoplastische Formmassen auf der Grundlage von Polyphenylenether oder Gemischen aus Polyphenylenethern und Styrolpolymerisaten gelöst, die außerdem ein hydriertes, lineares oder sternförmiges Blockcopolymerisat der allgemeinen Formel $(AB)_nX$ enthalten, worin die Blöcke A aufgebaut sind aus mindestens einem mono-alkenyl-aromatischen Kohlenwasserstoff und die Blöcke B statistisch aufgebaute hydrierte Copolymerisate sind, aus 5 bis 30 Gew.-Teilen mindestens eines mono-alkenyl-aromatischen Kohlenwasserstoffs, 95 bis 75 Gew.-Teilen mindestens eines copolymerisierbaren konjugierten Diens, und auf den B-Block aufgepfropft bis 40 Gew.-Teilen mindestens eines ethylenisch ungesättigten Monomeren, ausgewählt aus der Gruppe, der (Meth)acrylsäurealkylester mit 1 bis 8 C-Atomen im Alkylrest, Styrol und Acrylnitril, wobei die Gewichtsteile sich zu 100 Gewichtsteile ergänzen, wobei n eine ganze Zahl von 2 bis 8 ist und die Blöcke A 10 bis 80 Gew.-Teile des Blockcopolymerisats ausmachen und das Zentrum X durch Kopplung mit einem polyfunktionellen Kopplungsmittel über die Blöcke B gebildet wird.

Die hydrierten Blockcopolymerisate können linear oder verzweigt aufgebaut sein und enthalten im A-Block bevorzugt Styrol, α-Methylstyrol, o- und/oder p-Methylstyrol und/oder p-tert.-Butylstyrol und einen statistisch aufgebauten hydrierten B-Block aus 5 bis 30 Gewichtsteilen Styrol, α-Methylstyrol, o- und/oder p-Methylstyrol und/oder p-tert.-Butylstyrol, 95 bis 70 Gewichtsteilen Butadien, Isopren und/oder Pentadien und aufgepfropft auf den Block B 0 bis 40 Gewichtsteilen (Meth)acrylsäurealkylester mit 1 bis 4 C-Atomen im Alkylrest und/oder Acrylnitril, wobei mindestens 95% aller ursprünglich vorhandenen monoolefinisch ungesättigten Doppelbindungen hydriert und keine der von den vinylaromatischen Monomeren herrührende Doppelbindungen hydriert sind.

Besonders bevorzugt sind linear aufgebaute hydrierte $(AB)_2X$-Blockopolymerisate mit einem A-Blockanteil von 10 bis 80 Gewichtsteilen, aufgebaut aus Styrol, α-Methylstyrol und/oder p-Methylstyrol und einem hydrierten, statistisch aufgebauten B-Block bestehend aus 10 bis 25 Gewichtsteilen Styrol, α-Methylstyrol und/oder p-Methylstyrol und 90 bis 75 Gewichtsteilen Butadien und/oder Isopren sowie sternförmig aufgebaute hydrierte $(AB)_nX$-Blockcopolymerisate mit n=3 bis 8 mit entsprechendem Aufbau, wobei die AB-Blockcopolymerisate 3 bis 8 mal (n=3—8) über die B-Blöcke an das Zentrum X gekoppelt sind und in dem X durch Kopplung über $SiCl_4$, Polyhalogenide oder Polyester gebildet wird.

Darüber hinaus kann die bevorzugte Formmasse auch noch Hilfs- und Zusatzstoffe wie feuerhemmende Mittel aus der Gruppe der aromatischen Phosphate und Phosphinoxide, Verstärkungsmittel wie Glasfasern, organische und mineralische Füllstoffe sowie Stabilisatoren, Verarbeitungshilfsmittel, Farbstoffe und die sonst bisher für die Formmassen bekannt gewordenen Zusatzstoffe sowie weitere mit dem Matrixpolymerengemisch verträgliche Polymere wie SMSA-Copolymerisate, SAN-Copolymerisate, Styrol-(Meth)acrylsäure-Copolymerisate, Styrol-(Meth)acrylsäurealkylester-Copolymerisate mit $C_1$- bis $C_4$-Alkylresten, Polyetherimide, Polyacrylate, Polyamide und alle anderen bisher mit Polyphenylenether als mischbar bekannt gewordenen Polymerisate enthalten.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die thermoplastischen Formmassen können entweder Polyphenylenether oder Gemische aus Polyphenylenether und glasklare oder schlagfest modifizierte Styrolpolymerisaten, in beliebigen Mengen enthalten, beispielsweise in Mengen von 5 bis 75 Gew.-% Styrolpolymerisat und 95 bis 25 Gew.-% Polyphenylenether. Für die Herstellung von Formteilen eignen sich insbesondere solche Formmassen, die 10 bis 70 Gew.-% schlagfest modifizierte Styrolpolymerisate und 90 bis 30 Gew.-% Polyphenylenether enthalten. Zusätzlich enthalten die erfindungsgemäßen Formmassen 5 bis 40, vorzugsweise 10 bis 30 Gewichtsteile bezogen auf 100 Gewichtsteile der Mischung des hydrierten Blockcopolymerisates der allgemeinen Formel.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein α-ständiges tert. Wasserstoffatom besitzen, Halogenkohlenwasserstoffe, Phenylreste und Kohlenwasserstoff-oxid-Reste tragen. So kommen in Frage: Poly(2,6-dichlor-1,4-phenylen)ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Ganz besonders bevorzugt werden Poly(2,6-dimethyl-1,4-phenylen)ether mit einer Grenzviskosität zwischen 0,40 und 0,66 dl/g (gemessen in Chloroform bei 30°C).

Die aromatischen Polyphenylenether können durch Selbstkondensation der entsprechend einwertigen Phenole durch Einwirken von Sauerstoff in Gegenwart eines Katalysatorsystems, wie es beispielsweise in den US—PS—3 219 625, 3 306 875, 3 956 442, 3 965 069, 3 972 851 beschrieben ist, hergestellt werden.

Als Sytrolpolymerisate, die in der erfindungsgemäßen Formmasse gegebenenfalls enthalten sind, werden sowohl Styrolhomopolymerisate als auch schlagzäh modifizierte Styrolpolymerisate eingesetzt.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Die Homopolymerisate werden dabei nach den bekannten Verfahren, in Masse Lösung oder Suspension hergestellt (vgl. Ullmann's Encyklopädie der technischen Chemie, Bd. 19, S. 265, Verlag Chemie, Weinheim 1980). Die Homopolymerisate können mittlere Molekulargewichte (Mv) von 1000—250 000 aufweisen.

Die meist angewandten Verfahren zur Herstellung schlagzäh modifizierter Styrolpolymerisate sind die Polymerisation in Masse oder Lösung, wie es beispielsweise in der US—PS—2 694 692 beschrieben ist und Verfahren zur Masse-Suspensionspolymerisation, wie sie beispielsweise in der US—PS—2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk, z.B. Polybutadien, Polyisopren und Mischpolymerisate des Butadiens und/oder Isoprens mit Styrol und anderen Comonomeren, die eine Glastemperatur unter −20°C besitzen. Besonders eignen sich Butadien-Polymerisate mit einem 1,4-cis-Gehalt, der zwischen 25 und 99 liegt. Es können aber auch Acrylatkautschuke, EPDM-, Polybutylen- und Polyoctenamerkautschuke eingesetzt werden.

Die schlagzäh modifizierten Styrolpolymerisate besitzen einen Weichkomponentenanteil von 20—60 Gew.-%, vorzugsweise von 22—45 Gew.%. Die Teilchengröße der Weichkomponente sollte im Bereich von 0,2 bis 6 μm liegen, bei einem Anteil von 50 bis 98 Gew.% der Weichkomponente mit einer mittleren Teilchengröße von 0,2 bis 1 μm und 2 bis 50 Gew.% mit einer mittleren Teilchengröße von mehr als 3 μm. Besonders geeignet sind schlagzäh modifizierte Polymerisate, in denen die mittlere Teilchengröße im Bereich von 0,6 bis 4 μm liegt und in denen 98 bis 85 Gew.-% der Teilchen einen Teilchendurchmesser von 0,3 bis 0,9 μm und 2 bis 15 Gew.-% der Teilchen einen Durchmesser von 3 bis 7 μm haben.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus

3

EP 0 176 061 B1

elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50%-Ordinatenwert kann auf der Abszisse der Äquivalentdurchmesser dann abgegriffen werden. Die angegebenen mittleren Durchmesser stellen dabie einen Mittelwert von mindestens 5000 Teilchen dar.

Die Herstellung der in den Formmassen enthaltenen schlagzäh modifizierten Styrolpolymerisate kann wie oben gezeigt nach beliebigen Verfahren erfolgen, sofern dafür gesorgt ist, daß die oben genannten Teilchengrößenverteilungen eintreten. Man kann aber auch schlagzäh modifizierte Styrolpolymerisate, deren Weichkomponenten unterschiedliche Teilchengrößen haben, miteinander mischen. Die in den erfindungsgemäßen Formmassen enthaltenen Styrolpolymerisate können beispielsweise durch Mischen von Polymerisaten mit einer bestimmten Teilchengröße mit solchen Polymerisaten mit anderen Teilchengrößen erhalten werden. So kann man beispielsweise 90 Gew.-Tln eines Polymerisates mit einer mittleren Teilchengröße von 0,4 µm und 10 Gew.-Tln eines Polymerisates mit einer mittleren Teilchengröße von 6 µm verwenden.

Erfindungswesentlich sind die linear, oder sternförmig aufgebauten, hydrierten Blockpolymerisate der Formel (AB—)$_n$X Zum Aufbau der Blockpolymerisate kommen als monovinylaromatische Kohlenwasserstoffe in Betracht: Styrol sowie Seitenketten-alkylierte und kernalkylierte Styrol wie o- und p-Methylstyrol, Ethylvinylbenzol, tert.-Butylstyrol und α-Methylstyrol. Die monovinylaromatischer Verbindungen können allein oder in Mischung miteinander eingesetzt werden, vorzugsweise werden aber Styrol, α-Methylstyrol und p-Methylstyrol allein verwendet. Der Gewichtsanteil der monovinylaromatischen Verbindung an in den B-Blöcken beträgt 5 bis 30, vorzugsweise 10 bis 30 und ganz besonders bevorzugt 10 bis 25 Gewichtsteile.

Konjugierte Diene, die für die erfindungsgemäßen hydrierten Blockcopolymerisat-Blöcke B insbesondere in Betracht kommen, sind beispielsweise Butadien-1,3-sowie Isopren und Pentadien. Diese Diene werden entweder allein oder in Mischung miteinander für die Herstellung der statistischen Copolymerisate herangezogen. Der Dien-Gehalt in den (Co)-Polymerketten der Blöcke B kann 95 bis 70 Gewichtsteile, insbesondere 90 bis 70 Gewichtsteile und ganz besonders bevorzugt 90 bis 75 Gewichtsteile, bezogen auf die B-Blöcke, betragen.

Gegebenenfalls können in den erfindungsgemäßen statistisch aufgebauten, hydrierten Copolymerisaten auch noch bis zu 40 Gewichtsteile, vorzugsweise bis zu 10 Gewichtsteile mindestens eines copolymerisierbaren ethylenisch ungesättigten Monomeren wie (Meth)acrylsäurealkylester mit 1—8 C-Atomen im Alkylrest wie Methacrylat, Ethylacrylat, Butylacrylat, Hydroxyethylacrylat, Methylmethacrylat oder Acylnitril aufgepfropft auf die Blöcke B enthalten sein. Diese Monomeren können entweder allein oder in Mischung miteinander für die Herstellung der hydrierten statistischen Copolymerisate verwendet werden.

Die hydrierten linearen oder sternförmigen Blockcopolymerisate enthalten die Blöcke A und B im Verhältnis A:B wie 1:9 bis 8:2, vorzugsweise wie 1:6 bis 6:2. Die A-Blöcke machen 10 bis 80, insbesondere 20 bis 80 Gewichtsteile aus, bezogen auf jeweils 100 Gewichtsteile des Blockpolymerisats.

Die Kopplung der AB-Blockcopolymerisate an das Zentrum X erfolgt 2 bis 8 mal, vorzugsweise 3 bis 5 mal über die Blöcke B, mit einem polyfunktionellen Kipplungsmittel.

Die Herstellung der erfindungsgemäßen Blockcopolymeren erfolgt durch stufenweise anionische Polymerisation eines Alkenylaromaten, gefolgt von der Mischung aus Alkenylaromaten und Dien in Gegenwart eines geeigneten Randomizers und anschließendem Koppeln. Zum Schluß wird hydriert.

Als Randomizer kommen Basen wie Anisol, Dimethylglykol, N,N,N',N'-Tetramethylethylendiamin und Tetrahydrofuran in Frage. Bevorzugt ist Tetrahydrofuran. Pro Mol Initiator werden 5 bis 20 Mol Tetrahydrofuran vor der Polymerisation der Mischung aus den Monomeren in einem geeigneten Lösungsmittel zugesetzt.

Als Lösungsmittel für die Polymerisation eignen sich zweckmäßig geradkettige und verzweigte aliphatische Kohlenwasserstoffe wie z.B. n-Pentan, n-Octan, n-Dekan, Isopentan, Isooctan, 2,3-Dimethylbutan, sowie einfache oder substituierte cycloaliphatische und aromatische Kohlenwasserstoffe wie z.B. Cyclopentan, Cyclohexan, Methylcyclohexan, Dekalin, Benzol, Toluol, Ethylbenzol, Cumol, Mesitylen, Tetralin sowie jede beliebige Mischung der aliphatischen, cycloaliphatischen und aromatischen Kohlenwasserstoffe. Vorteilhaft eignet sich als Lösungsmittel Cyclohexan.

Die Momomerenkonzentration im Lösungsmittel liegt vorteilhaft zwischen 20 und 26%. Es ist zweckmäßig, die Copolymerisation so zu führen, daß die erhaltenen, nicht hydrierten Copolymerisate ein Molekulargewicht haben, das vor dem Koppeln im Bereich zwischen 25.000 und 65.000 liegt. Das Molekulargewicht wird mittels Gelpermeationschromatographie bestimmt und als sogenanntes "Peakmolekulargewicht" angegeben (Eichstandards: eng verteiltes Polystyrol, Temperatur 23°C, Lösungsmittel Tetrahydrofuran). Gelpermeations-Chromatographiekurven wurden gemäß DOS 19 59 922 erhalten, indem man ein Waters Associates Model 100 GPO verwendete und eine Säule, die mit Polystyrolgel der besten erhältlichen Qualität gefüllt war. Es wurden Polymerlösungen von 0,05 Gew.Vol.-% in Tetrahydrofuran hergestellt. Die Größe der Proben betrug 2 ml der filtrierten Lösung (Krueger HAK-1 pads). Die Flußgeschwindigkeit betrug ungefähr 1 ml/min bei Zimmertemperatur durch eine Viersäulen-Anordnung in Serie in der Porositätsordnung von 1000, 10, 1 und 0,1 µm. Um diesen Molekulargewichtsbereich zu erhalten, verwendet man zweckmäßig Lithiumalkylkatalysatoren in Mengen von 0,5 bis 8 Mol/100 kg, bezogen auf das Monomerengemisch.

4

Als Initiatoren für die Polymerisation eignen sich von den Lithiumalkylen insbesondere Methyllithium, Ethyllithium, n-, sec.-, tert.-Butyllithium, Isopropyllithium, vorzugsweise wird n- oder sek.-Butyllithium eingesetzt.

Das polyfunktionelle Kopplungsmittel kann so beschaffen sein, daß eine zweifache oder auch drei-, vier- oder mehrfache Kopplung bis achtfache Kopplung möglich ist.

Lineare Blockcopolymere vom (A—B—)₂-X-Typ erhält man durch Koppeln mit einem polyfunktionellen Kopplungsmittel das eine bifunktionelle Kopplung ermöglicht, wie z.B. Dibromethan, monofunktionelle Ester wie z.B. Essigsäureethylester, Dichlordimethylethan u.a. Verzweigte Blockcopolymerisate lassen sich in besonders guten Ausbeuten durch Koppeln gemäß der Lehre der DE—OS—2 931 736 herstellen.

Geeignete Kopplungsmittel für sternförmig aufgebaute Blockcopolymerisate sind polyfunktionelle Kopplungsmittel, die eine drei- bis achtfache Kopplung ermöglichen, beispielsweise Polyepoxide wie epoxidiertes Leinsamenöl, Polyisocyanate, beispielsweise Benzo-1,2,4-triisocyanat, Polyketone, Polyanhydride, wie beispielsweise das Dianhydrid der Pyromellithsäure, oder Polyhalogenide. Ebenso können auch Dicarbonsäureester, z.B. Diethyladipat oder ähnliche, als Kopplungsmittel verwendet werden. Eine weitere bevorzugte Gruppe von Kopplungsmitteln sind die Siliciumhalogenide, insbesondere Siliciumtetrachlorid, Siliciumtetrabromid, Trichlorethylsilan oder 1,2-Bis-(methyldichlorsilyl)-ethan. Weiterhin können als Kopplungsmittel auch Polyvinylaromaten, insbesondere Divinylbenzol eingesetzt werden, wie es beispielsweise in der US—PS—3 280 084 beschrieben ist. In diesem Fall addieren sich einige Divinylbenzol-Einheiten unter Vernetzung zu einem Verzweigungszentrum, über das die vorgeformten Polymerisatblöcke miteinander verbunden werden.

Die Art des angewandten polyfunktionellen Kopplungsmittels ist nicht kristisch, solange hierdurch die gewünschten Eigenschaften des Endproduktes nicht wesentlich beeinträchtigt werden. Vorzugsweise wird ein tri- oder tetrafunktionelles Kopplungsmittel der genannten Art oder Divinylbenzol eingesetzt. Das polyfunktionelle Kopplungsmittel wird dabei der Reaktionslösung im allgemeinen in Mengen zugegeben, die äquivalent sind zu der Gesamtmenge der lebenden Polymerblöcke, d.h. zur Anzahl der aktiven Lithium-Kohlenstoff-Bindungen in den zuvor gebildeten linearen Copolymerisatblöcken. Die Umsetzung der aktiven, linearen Copolymerisate mit dem Kopplungsmittel erfolgt dabei vorzugsweise unter den gleichen Reaktionsbedindungen wie die vorangegangene Polymerisation der Monomeren.

Das Pfropfen der B-Blockanteile erfolgt nach bekannten Methoden der Pfropfcopolymerisation. Vorzugsweise wird in Gegenwart von Radikalinitiatoren bei Temperaturen, bei denen die Halbwertszeit des Initiatorzerfalls bei 10 bis 300 Minuten liegt, gepfropft. Als Pfropfmonomere werden vorzugsweise ethylenisch ungesättigte, radikalisch polymerisierbare Monomere, wie Methylacrylat, Ethylacrylat, Butylacrylat, Hydroxypropylacrylat, Methylmethacrylat, Styrol und/oder Acrylnitril eingesetzt. Der Anteil dieser Monomeren am B-Block beträgt 0—40 Gew.-Teile, vorzugsweise 2—10 Gew.-Teile.

Das Hydrieren der Butadienanteile des Copolymerisates erfolgt nach bekannten Verfahren (vgl. DOS 31 06 959). Dabei ist darauf zu achten, daß überweigend die vom Butadien herrührenden Doppelbindungen hydriert werden und ein Hydrieren der aromatischen Systeme vermieden wird. Das Hydrieren kann beispielsweise durch Umsetzen der Polymerisate mit Wasserstoff bei Drücken zwischen 5 und 30 bar, insbesondere 10 bis 20 bar und Temperaturen im Bereich von 50 bis 200°C, insbesondere 70 bis 150°C, in Gegenwart von Übergangsmetallkatalysatoren erfolgen. Dabei est es erforderlich, mindestens 95%, insbesondere 97%, der olefinischen Doppelbindungen zu hydrieren. Als Katalysatoren eignen sich z.B. homogene Ni/Al-Katalysatorsystem, hergestellt aus Ni-II-octoat bzw. -acetylacetonat, Bis-(2,4-pentadienato)nickel) und Al-triethyl bzw. -triisobutyl. Man verwendet zweckmäßig den Katalysator in Menge von 0,3 Mol/kg bis 7,0 mMol/kg, Ni bezogen auf das Gewicht des zu hydrierenden Polymeren.

Die Aufarbeitung der hydrierten Blockcopolymeren erfolgt in bekannter Weise durch Entfernen des Lösungsmittels mittels Dampfstrippen oder mittels Extruderentgasung. Die Aufarbeitung kann aber auch zusammen mit den anderen Komponenten der erfindungsgemäßen Formmassen erfolgen.

Die Mischungen aus Polyphenylenether und den hydrierten Copolymerisaten, die gegebenenfalls auch Styrolpolymerisate enthalten können, können darüber hinaus auch noch Hilfs- und Zusatzstoffe wie feuerhemmende Mittel aus der Gruppe der aromatischen Phosphate und Phosphinoxide, Verstärkungsmittel wie Glasfasern, organische und mineralische Füllstoffe sowie Stabilisatoren, Verarbeitungshilfsmittel, Farbstoffe und die sonst bisher für die Formmassen bekannt gewordenen Zusatzstoffe sowie weitere mit dem Matrixpolymerengemisch mischbare Polymere, wie SMSA-Copolymerisate, SAN-Copolymerisate, Stryol-(Methy)-acrylsäure-Copolymerisate, Styrol-(Meth)-acrylsäurealkylester-Copolymerisate mit $C_1$—$C_4$-Alkylresten, Polyetherimide, Polyacrylate, Polyamide und alle anderen bisher mit Polyphenylenether als mischbar bekannt gewordenen Polymerisate enthalten.

Die erfindungsgemäßen Formmassen besitzen neben einer hohen Wärmeformbeständigkeit und guten mechanischen Eigenschaften, insbesondere guten Kerbschlagzähigkeiten und Bruchenergien, eine ausgezeichnete Fließfähigkeit und vorzügliche Verarbeitbarkeit auch im Großspritzguß.

Die folgenden Beispiele dienen dazu, die Erfindung zu beschreiben, ohne daß damit eine Begrenzung der Erfindung beabsichtigt ist. Die angegebenen Teile sind Gewichtsteile, es sei denn, es ist anders angegeben.

Beispiele und Vergleichsbeispiele

Komponente a)

Es wurde ein Poly(2,6-dimethyl-1,4-phenylen)ether mit einer Grenzviskosität von 0,60 dl/g (gemessen in Chloroform bei 30°C) und einem Rest-Kupfergehalt von 4 ppm, bezogen auf das Polymerisat eingesetzt. Der Polyphenylenether war gemäß den Beispielen der DE—OS—30 35 599 und der EP—81 708 hergestellt worden.

Komponente b)

Folgende Styrolpolymerisate wurden eingesetzt:

$B_1$) Ein Polystyrol mit einem Molekulargewicht von 200 000 (viskosimetrische Messung in Benzol bei 25°C), hergestellt gemäß S. R. Sandler, W. Karo Polymer Synthesis Org. Chem. Vol. 29/I, Academic Press, New York 1974, Seite 3.

$B_2$) Ein schlagfestes Polystyrol mit einer mittleren Teilchengröße (Gewichtsmittel) von 0,5 µm und einem Polybutadienanteil von 8 Gew.%, hergestellt gemäß DE—OS—30 35 648.

$B_3$) Ein schlagfestes Polystyrol mit einer mittleren Teilchengröße (Gewichtsmittel) von 6,4 µm und einem Polybutadienanteil von 8 Gew.%, hergestellt gemäß DE—OS—30 35 648.

Komponente c)

Folgende hydrierte Blockpolymerisate wurden eingesetzt:

$C_1$) Ein ABA-Blockpolymerisat mit scharf getrennten A-Blöcken bestehend aus Polystyrol, die 30 Gew.% ausmachen, und einem hydrierten Polybutadienblock B, der 70 Gew.% ausmacht. Der Blockkautschuk hatte eine Glastemperatur von —48°C (nach K. H. Illers und H. Breuer, Colloid-Zeitschrift, 176 (1961), Seite 110) und ein Molekulargewicht von 70 000.

$C_2$) Ein hydriertes (AB$+)_4$X-Blockpolymerisat mit folgendem Aufbau:

A-Block: 20 Gew.% bestehend aus Polystyrol.

B-Block: hydriertes statistisches Styrol-Butadien-Copolymerisat, bestehend aus 12,5 Gew.% Styrol und 87,5 Gew.% Butadien X:Si durch Kopplung mit $SiCl_4$.

Die Herstellung erfolgte nach folgender Vorschrift: In einem trockenen Kessel werden unter Inertgasatmosphäre 3224 g Cyclohexan, 19,44 ml THF und 215,6 g Styrol vorgelegt. Mit sec.-Butyl-Lithium wird austitriert und mit 47,9 mMol sec.-Butyl-Lithium 35 min bei 56°C polymerisiert. Nach Zugabe von 107,8 g Styrol und 730 g Butadien wird 50 min bei 56°C polymerisiert, mit 24,6 g Butadien die "lebende" Lösung eingefärbt und mit 12 mMol $SiCl_4$ gekoppelt.

Es wird eine Viskositätszahl von 75 $cm^3$/g (Toluol, 25°C) gefunden. Das Molekulargewicht beträgt 100.000. Die Glastemperatur lag bei —54°C.

$C_3$) Ein hydriertes (AB$+)_2$X-Blockpolymerisat mit folgendem Aufbau:

A-Blöcke: 20 Gew.% Polystyrol.

B-Blöcke: hydriertes statistisch aufgebautes Styrol-Butadien-Blockpolymerisat mit 12,5 Gew.% Styrol und 87,5 Gew.% Butadien X: ergibt sich durch Kopplung mit Essigsäureethylester.

Es wird wie in Beispiel 1 verfahren. Gekoppelt wird mit 24 mMol Essigsäureethylester. VZ.=63,2 $cm^3$/g; Molekulargewicht 65.000. Glastemperatur: —53°C.

Zusätzstoffe d)

Folgende Zusatzstoffe wurden verwendet:

$D_1$) Triphenylphosphat.

$D_2$) Ethylen-Buten-1-Copolymerisat mit einem Buten-1-Anteil von 8 Gew.% und einer Dichte von 0,919 (g/$cm^3$) und einem Meltindex von 1 (g/10 min) bei 190°C und 21,6 kP.

$D_3$) Styrol-Maleinsäureanhydrid-Copolymerisat mit einem Maleinsäureanhydridanteil von 9 Gew.% und einer Viskositätszahl von 70 (dl/g) (gemessen, 0,5% in Dimethylformamid bei 25°C).

$D_4$) Titandioxid mit einer mittleren Teilchengröße von 0,5 µm.

$D_5$) Trisnonylphenylphosphit.

Herstellung der Formmassen:

Die in der Tabelle angegebenen Gewichtsanteile der Komponenten a, b, c und der Zusatzstoffe d wurden miteinander in einem Fluidmischer vermischt und auf einem Zweischneckenextruder bei 280°C aufgeschmolzen, homogenisiert und granuliert.

Prüfung der Formmassen:

Aus den genannten Mischungen wurde mittels einer Spritzgußmaschine bei 280°C Spritztemperatur Prüfkörper hergestellt.

Es wurde die Bruchenergie nach DIN 350 443, Blatt 1 bei 23°C gemessen und die Kerbschlagzähigkeit nach DIN 53 433 bei 23°C.

Die Fließfähigkeit wurde anhand des Schmelzindexes nach DIN 53 735 ermittelt und die Wärmeformbeständigkeit gemäß DIN 530 460/B bestimmt.

Das Verarbeitungsverhalten im Spritzguß wurde auf einer Einschneckenspritzgußmaschine, Fabrikat IDRA, Typ M+B 120S-4200 überprüft (Zuhaltekraft 12 000 KN, Einspritzvolumen 3200 $cm^3$ eff.). Es wurde

eine Fernseherrückwand mit folgenden technischen Daten als Spritzling verwendet:

Mittleres Gewicht des Spritzlings: 1,800 kg.

Abmessung des Spritzlinges (Länge/Breite/Höhe in mm): 750/490/150.

maximaler Fließweg FW/mittlere Wanddicke WD (mm): 411/3.

FW/WD-Verhältnis: 137:1.

Angußart und Abmessungen: Kegel (mm): 7,5/10,5; Länge 90.

Bei der Herstellung wurden folgende Maschinendaten eingehalten:

Temperaturführung im Plastifizierungszylinder (°C) wahlweise für die einzelnen Schüsse:

230/230/240/240/240
230/240/240/250/265
250/250/260/270/280
260/260/260/270/290

Temperatur der Angußzone: 60°C.

Temperatur im Werkzeug: Gesenkboden 85°C; Gesenkmantel 85°C; Kern 70°C.

Auswerferstempel: 60°C.

Staudruck (bar): Null (offene Düse).

Einspritzzeit in Sekunden: 3.

Nachdruckzeit in Sekunden: 1,2.

Abkühlzeit in Sekunden: 38

Pausenzeit in Sekunden: 0.

Gesamtzykluszeit in Sekunden: 60.

Schneckendrehzahl in Minuten$^{-1}$: 36.

Das Verarbeitungsverhalten wurde über den Schmelzfließindex und die Verarbeitungsbreite beurteilt. Die Verarbeitungsbreite ist der Durckbereich, in dem die Formteile keine Beanstandungen aufweisen. Der Bereich wird bei tiefem Spritzdruck durch den optimalen Spritzdruck begrenzt, d.h. die Formteile weisen keine Einfallstellen mehr auf. Die obere Grenze ergibt sich aus dem Spritzdruck, bei dem die Formteile gerade nach entformt werden können. Oberhalb dieser Grenze wird die Form überfüllt. Je größer dieser Bereich ist, umso besser, d.h. mit umso geringeren Schwierigkeiten läßt sich ein Polymerisat verarbeiten. Eine hohe Verarbeitungsbreite ist erwünscht, um z.B. bei Druckschwankungen oder Schwankungen der Materialeigenschaften, die Ausfallrate an Spritzgußformlingen möglichst niedrig halten zu können. Die Tabelle enthält deshalb die Verarbeitungstemperatur in °C sowie der zu diesen Verarbeitungstemperaturen ermittelte optimale Spritzdruck in bar. Im Anschluß daran folgt eine Spalte, in der die Verarbeitungsbreite den jeweiligen Verarbeitungstemperaturen und dem ermittelten optimalen Spritzdruck zugeordnet ist. Die Tabelle schließt ab mit einer Spalte, in der Bemerkungen, z.B. über eventuelle Schäden (Angußreißer=Risse am Anguß; Schieferbruch=schiefriger Bruch im Angußbereich) an den erhaltenen Spritzgußformteilen enthalten sind.

Die Ergebnisse der Tabelle verdeutlichen, daß die erfindungsgemäßen Formmassen ein wesentlich besseres Verarbeitungsverhalten, insbesondere eine fehlerfreie Verarbeitung in einem breiten Verarbeitungsbereich aufweisen. Vergleiche hierzu insbesondere die Ergebenisse der Versuche 1, 2 und 7 und der Vergleichsversuche A und B.

TABELLE

| Beispiel | Zusammensetzung der Mischung Komponenten | | | | Vicat-temperatur (°C) | Kerbschalg-zähigkeit (KJ/m²) | Bruch-energie (Nm) | Meltindex (21,6 Kp/ 250°C) (g/10') | Spritz-temperatur (°C) | druck [bar] | Verarbeit-ungs-breite | Bemerkungen |
| | a) [Gew.-Teile] | b) [Gew.-Teile] | c). [Gew.-Teile] | d) [Gew-Teile] | | | | | | | | |
| 1 | 45 | B$_2$ (41) B$_3$ (4) | C$_2$ (7) | D$_2$ (1) D$_5$ (2) | 135 | 16 | 48 (12) | 50 | 290 300 | 1060 920 | 100 120 | keine |
| 2 | 45 | B$_2$ (41) B$_3$ (4) | C$_3$ (7) | D$_2$ (1) D$_5$ (2) | 135 | 17 | 44 (8) | 57 | 290 300 | 1030 920 | 90 110 | keine |
| 3 | 60 | B$_1$ (22) | C$_2$ (15) | D$_2$ (1) D$_5$ (2) | 156 | 18 | 53 (10) | 10 | 310 320 | 1200 1050 | 90 90 | keine |
| 4 | 40 | B$_2$ (32) B$_3$ (3) | C$_2$ (17) | D$_2$ (1) D$_3$ (5) D$_5$ (2) | 129 | 19 | 45 (11) | 58 | 290 300 | 1050 900 | 110 120 | keine |
| 5 | 40 | B$_2$ (32) B$_3$ (3) | C$_2$ (15) | D$_2$ (1) D$_4$ (7) D$_5$ (2) | 126 | 21 | 47 (10) | 68 | 290 300 | 1020 920 | 120 120 | keine |
| 6 | 50 | B$_2$ (27) B$_3$ (3) | C$_2$ (10) | D$_1$ (7) D$_2$ (1) D$_5$ (2) | 121 | 20 | 39 (8) | 101 | 270 280 | 1220 1070 | 110 120 | keine |
| 7 | 60 | — | C$_2$ (25) | D$_1$ (7) D$_2$ (1) D$_4$ (5) D$_5$ (2) | 134 | 26 | 42 (13) | 68 | 290 300 | 1060 950 | 100 100 | keine |

TABELLE Forts.

| Beispiel | Zusammensetzung der Mischung Komponenten | | | | Vicat-tempera-tur (°C) | Kerbschlag-zähigkeit (KJ/m²) | Bruch-energie (Nm) | Meltindex (21,6 Kp/ 250°C) (g/10') | Spritz-tempera-tur (°C) | Spritz-druck [bar] | Verarbeit-ungsbreite | Bemerkungen |
|---|---|---|---|---|---|---|---|---|---|---|---|---|
| | a) [Gew.-Teile] | b) [Gew.-Teile] | c) [Gew.-Teile] | d) [Gew.-Teile] | | | | | | | | |
| Vergleichs-beispiele (nicht erfind-ungsgemäß) A | 45 | $B_2$ (41) $B_3$ (4) | $C_1$ (7) | $D_2$ (1) $D_5$ (2) | 132 | 15 | 30 (35) | 25 | 290 300 | 1280 1140 | 40 40 | Angußreißer Schieferbruch |
| B | 60 | — | $C_1$ (25) | $D_1$ (7) $D_2$ (1) $D_4$ (3) $D_5$ (2) | 130 | 24 | 30 (33) | 21 | 290 300 | 1230 1070 | 15 15 | Schieferbruch |

**Patentansprüche**

1. Thermoplastische Formmasse auf der Grundlage eines Polyphenylenethers, der ein in ortho-Position disubstituiertes Polyphenylenoxid ist, von dem der Ethersauerstoff einer Einheit mit dem Benzolkern der benachbarten Einheit verbunden ist und wobei mindestens 50 Einheiten verbunden sind oder eines Gemisches dieses Polyphenylenethers mit bis zu 75 Gew.-% eines Styrolhomopolymerisats oder schlagzäh modifizierten Styrolpolymerisats, das 20 bis 60 Gew.-% Weichkomponente enthält, wobei 98 bis 50 Gew.-% dieser Weichkomponente eine mittlere Teilchengröße im Bereich 0,2 bis 1 µm und 2 bis 50 Gew.-% eine mittlere Teilchengröße von größer als 3 µm aufweisen, dadurch gekennzeichnet, daß sie außerdem 5 bis 40 Gew.-Teile, bezogen auf die Mischung eines hydrierten linearen oder sternförmigen Blockpolymerisats der allgemeinen Formel

$$(AB\text{-}\!\!)_n X$$

enthält, worin die Blöcke A aufgebaut sind aus mindestens einem monoalkenyl-aromatischen Kohlenwasserstoff und die Blöcke B statistisch aufgebaute hydrierte Copolymerisate sind aus 5 bis 30 Gewichtsteilen mindestens eines Mono-alkenyl-aromatischen Kohlenwasserstoffs, 95 bis 70 Gewichtsteilen mindestens eines copolymerisierbaren konjugierten Diens und auf den Block B aufgepfropft 0 bis 40 Gewichtsteilen mindestens eines ethylenisch ungesättigen Monomeren, ausgewählt aus der Gruppe der (Meth)acrylsäurealkylester mit 1 bis 8 C-Atomen im Alkylrest, Styrol und Acrylnitril, wobei die Gewichtsteile sich zu 100 Gewichtsteilen ergänzen, und n eine ganze Zahl von 2 bis 8 ist und die Blöcke A 10 bis 80 Gewichtsteile des Blockcopolymerisats ausmachen und das Zentrum X durch Kopplung mit einem polyfunktionellen Kopplungsmittel über die Blöcke B gebildet wird.

2. Thermoplastische Formmasse gemäß Anspruch 1, dadurch gekennzeichnet, daß sie ein Blockpolymerisat der allgemeinen Formel $(AB\text{-}\!\!)_n X$ enthält, worin die A-Blöcke aufgebaut sind aus Styrol, α-Methylstyrol, o- und/oder p-Methylstyrol, o- und/oder p-tert.-Butylstyrol oder deren Mischungen und die B-Blöcke statistisch aufgebaute hydrierte Copolymerisate darstellen, aus 5 bis 30 Gewichtsteilen Styrol, α-Methylstyrol, o- und/oder p-Methylstyrol, o- und/oder p-tert.-Butylstyrol oder deren Mischungen und 95 bis 70 Gewichtsteilen Butadien, Isopren und/oder Pentadien oder deren Mischungen, wobei die Gewichtsteile sich auf 100 ergänzen und die A-Blöcke zusammen 10 bis 80 Gewichtsteile des Blockpolymerisates ausmachen.

3. Thermoplastische Formmasse gemäß Anspruch 1, dadurch gekennzeichnet, daß sie ein Blockpolymerisat der allgemeinen Formel enthalten, worin n 3 bis 8 sein kann und die Blöcke A 20 bis 80 Gewichtsteile des Blockpolymerisates ausmachen.

4. Thermoplastische Formmasse gemäß Anspruch 1, dadurch gekennzeichnet, daß mindestens 95% aller ursprünglich vorhandenen monoolefinisch ungesättigten Doppelbindung im Blockpolymerisat hydriert sind.

5. Thermoplastische Formmasse gemäß Anspruch 1, dadurch gekennzeichnet, daß im Blockpolymerisat die monoolefinisch ungesättigten Doppelbindungen zu mindestens 95% hydriert und die von den vinylaromatischen Monomeren herrührenden Doppelbindungen nicht hydriert sind.

6. Thermoplastische Formmasse gemäß Anspruch 1, dadurch gekennzeichnet, daß auf die Blöcke B bis 40 Gewichtsteile mindestens eines ethylenisch ungesättigten Monomeren, ausgewählt aus der Gruppe der (Meth)acrylsäurealkylester mit 1 bis 4 C-Atomen im Alkylrest aufgepfropft sind.

7. Thermoplastische Formmasse gemäß Anspruch 1, dadurch gekennzeichnet, daß das Blockpolymerisat ein lineares $(AB\text{-}\!\!)$-X-Blockpolymerisat ist mit einem Anteil von 10 bis 80 Gew.% A-Blöcke, die aus Styrol und/oder p-Methylstyrol und 90 bis 20 Gew.% an hydrierten B-Blöcken bestehen, in denen die Comonomeren in statistischer Verteilung eingebaut sind und als monomere Bausteine 10 bis 25 Gew.% Styrol und/oder p-Methylstyrol und 90 bis 75 Gew.% Butadien und/oder Isopren enthalten.

8. Thermoplastische Formmassen gemäß Anspruch 1, dadurch gekennzeichnet, daß das Blockpolymerisat ein hydriertes sternförmig aufgebautes Polymerisat mit einem Zentrum X darstellt, von dem aus sich drei lineare AB-Blockpolymerketten gekoppelt über B nach außen erstrecken und in denen die A-Blöcke aufgebaut sind aus Styrol und/oder p-Methylstyrol und die B-Blöcke hydrierte Copolymerisate mit statistischer Verteilung sind, in denen als monomere Bausteine 10 bis 25 Gew.% Styrol und/oder p-Methylstyrol und 90 bis 75 Gew.% Butadien und/oder Isopren enthalten sind, und die A- und B-Blöcke in einem Gewichtsverhältnis von 6:2 bis 1:6 stehen.

9. Thermoplastische Formmasse gemäß Anspruch 1, dadurch gekennzeichnet, daß zusätzlich weitere mit dem Matrixpolymeren mischbare Polymere enthalten sind.

10. Thermoplastische Formmasse gemäß Anspruch 1, dadurch gekennzeichnet, daß als weitere mit dem Matrixpolymeren verträgliche Polymere Styrol-Maleinsäureanhydrid-Copolymere, Styrol-Acrylnitril-Copolymere, Styrol-Alkyl(meth)acrylat-Copolymere mit $C_1$—$C_4$-Alkylresten, Styrol(Meth)acrylsäure-Copolymerisate, Polyetherimidpolymerisate, Polyamide oder Polyacrylate enthalten sind.

11. Thermoplastische Formmasse gemäß Ansprüchen 1 bis 6, dadurch gekennzeichnet, daß zusätzlich feuerhemmende Mittel ausgewählt aus der Gruppe der aromatischen Phosphate und Phosphinoxide enthalten sind.

12. Thermoplastische Formmasse gemäß Ansprüchen 1 bis 6, dadurch gekennzeichnet, daß zusätzlich eine verstärkend wirkende Menge eines Glasfaserverstärkungsfüllstoffes enthalten ist.

13. Thermoplastische Formmasse gemäß Ansprüchen 1 bis 6, dadurch gekennzeichnet, daß zusätzlich mineralische Füllstoffe enthalten sind.

**Revendications**

1. Matière à mouler thermoplastique à base d'un poly(éther de phénylène), qui est un poly(oxyde de phénylène) disubstitué en position ortho, dont l'oxygène éthéré d'une unité est lié au noyau benzénique de l'unité voisine et où au moins 50 unités sont liées, ou à base d'un mélange de ce poly(éther de phénylène) et de jusqu'à 75% en poids d'un homopolymère du styrène, ou d'un polymère du styrène modifié pour résister au choc, qui contient de 20 à 60% en poids de composant mou, où de 98 à 50% en poids de ce composant mou présentent un calibre moyen des particules qui fluctue de 0,2 à 1 µm et de 2 à 50% en poids présentent un calibre moyen des particules supérieure à 3 µm, caractérisée en ce qu'elle contient, en outre, de 5 à 40 parties en poids, par rapport au mélange, d'un copolymère à blocs hydrogéné, linéaire ou étoilé, répondant à la formule générale

$$(AB \boldsymbol{\frac{}{n}} X$$

dans laquelle les blocs A se composant d'au moins un hydrocarbure monoalcényle-aromatique et les blocs B se composent de copolymères hydrogénés statistiques ou stochastiques, formés de 5 à 30 parties en poids d'au moins un hydrocarbure monoalcényle-aromatique, de 95 à 70 parties en poids d'au moins un diène conjugué polymérisable, et sur le bloc B sont greffées de 0 à 40 parties en poids d'au moins un monomère à insaturation oléfinique, choisi dans le groupe formé par les (méth)acrylates d'alkyle dont le radical alkyle comporte de 1 à 8 atomes de carbone, le styrène et l'acrylonitrile, où les parties en poids se complètent pour former 100 parties en poids et n représente un nombre entier dont la valeur varie de 2 à 8 et les blocs A constituent de 10 à 80 parties en poids du copolymère à blocs et le centre X est formé par le couplage avec un agent de couplage polyfonctionnel par l'intermédiaire des blocs B.

2. Matière à mouler thermoplastique suivant la revendication 1, caractérisée en ce qu'elle contient un polymère à blocs de la formule générale $(AB \frac{}{n} X$ dans laquelle les blocs A sont constitués de styrène, d'α-méthylstyrène, de o- et/ou p-méthylstyrène, de o- et/ou de p-tert-butylstyrène ou de leurs mélanges et les blocs B représentent des copolymères hydrogénés de constitution statistique ou stochastique, formés de 5 à 30 parties en poids de styrène, d'α-méthylstyrène, de o- et/ou p-méthylstyrène, de o- et/ou p-tert-butylstyrène ou de leurs mélanges et de 95 à 70 parties en poids de butadiène, d'isoprène et/ou de pentadiène ou de leurs mélanges, où les parties en poids se complètent pour former 100 parties en poids et les blocs A constituent ensemble de 10 à 80 parties en poids du polymère à blocs.

3. Matière à mouler thermoplastique suivant la revendication 1, caractérisée en ce qu'elle contient un polymère à blocs de la formule générale dans laquelle n peut posséder une valeur qui varie de 3 à 8 et les blocs A constituent de 20 à 80 parties en poids du polymère à blocs.

4. Matières à mouler thermoplastique suivant la revendication 1, caractérisée en ce qu'au moins 95% de toutes les doubles liaisons à insaturation monooléfinique présentes à l'origine dans le polymère à blocs sont hydrogénées.

5. Matière à mouler thermoplastique suivant la revendication 1, caractérisée en ce que, dans le polymère à blocs, les doubles liaisons à insaturation monooléfinique sont hydrogénées à raison d'au moins 95% et les solubles liaisons qui proviennent des monomères vinylaromatiques ne sont pas hydrogénées.

6. Matière à mouler thermoplastique suivant la revendication 1, caractérisée en ce que jusqu'à 40 parties en poids d'au moins un monomère à insaturation éthylénique, choisi dans le groupe des (méth)acrylates d'alkyle dont le radical alkyle comporte de 1 à 4 atomes de carbone, sont greffées sur les blocs B.

7. Matière à mouler thermoplastique suivant la revendication 1, caractérisée en ce que le polymère à blocs est un polymère à blocs de $(AB \frac{}{)} X$, linéaire, avec une fraction de 10 à 80% en poids des blocs A qui se composent de styrène et/ou de p-méthylstyrène et de 90 à 20% en poids de blocs B hydrogénés, où les comonomères sont incorporés en répartition statistique ou stochastique et contiennent, à titre de monomères constitutifs, de 10 à 25% en poids de styrène et/ou de p-méthylstyrène et de 95 à 75% en poids de butadiène et/ou d'isoprène.

8. Matière à mouler thermoplastique suivant la revendication 1, caractérisée en ce que le polymère à blocs représente un polymère de constitution étoilée, hydrogéné, avec un centre X à partir duquel s'étendent 3 chaînes polymères à blocs A et B, linéaires, couplées par l'intermédiaire de B et où les blocs A se composent de styrène et/ou p-méthylstyrène et les blocs B de copolymères hydrogénés à répartition stochastique ou statistique, et qui contiennent, à titre de monomères constitutifs, de 10 à 25% en poids de styrène et/ou de p-méthylstyrène et de 90 à 75% en poids de butadiène et/ou d'isoprène, et les blocs A et B sont présents dans le rapport pondéral de 6:2 à 1:6.

9. Matière à mouler thermoplastique suivant la revendication 1, caractérisée en ce qu'elle contient complémentairement d'autres polymères miscibles au polymère formant la matrice.

10. Matière à mouler thermoplastique suivant la revendication 1, caractérisée en ce qu'elle contient, à titre de polymères compatibles avec le polymère formant la matrice, des copolymères du styrène et de l'anhydride maléique, des copolymères du styrène et de l'acrylonitrile, des copolymères du styrène et de (méth)acrylates d'alkyle à radicaux alkyle en $C_1$ à $C_4$, des copolymères du styrène et de l'acide (méth)acrylique, des polymères de polyétherimides, des polyamides ou des polyacrylates.

11. Matière à mouler thermoplastique suivant les revendications 1 à 6, caractérisée en ce qu'elle contient complémentairement des agents ignifugeants qui appartiennent au groupe formé par les oxydes de phosphine et les phosphates aromatiques.

12. Matière à mouler thermoplastique suivant les revendications 1 à 6, caractérisée en ce qu'elle contient complémentairement une proportion à activité de renforcement d'une charge de renforcement en fibres de verre.

13. Matière à mouler thermoplastique suivant les revendications 1 à 6, caractérisée en ce qu'elle contient complémentairement des charges minérales.

## Claims

1. A thermoplastic molding material based on a polyphenylene ether which is a polyphenylene oxide which is disubstituted in the ortho-position and in which the ether oxygen of one unit is bonded to the benzene nucleus of the adjacent unit and where not less than 50 units are bonded, or a mixture of this polyphenylene ether with not more than 75% by weight of a styrene homopolymer or of a high impact styrene polymer which contains from 20 to 60% by weight of the soft component, from 98 to 50% by weight of this soft component having a mean particle size of from 0.2 to 1 µm and from 2 to 50% by weight having a mean particle size greater than 3 µm, wherein said molding material furthermore contains from 5 to 40 parts by weight, based on the mixture, of a hydrogenated linear or star block polymer of the formula

$$(AB-)_nX$$

where the blocks A are composed of one or more monoalkenyl-aromatic hydrocarbons and the blocks B are hydrogenated random copolymers consisting of from 5 to 30 parts by weight of one or more monoalkenylaromatic hydrocarbons, from 95 to 70 parts by weight of one or more copolymerizable conjugated dienes and, grafted onto the block B, from 0 to 40 parts by weight of one or more ethylenically unsaturated monomers selected from the group consisting of alkyl (meth)acrylates where the alkyl radicals are of 1 to 8 carbon atoms, styrene and acrylonitrile, the numbers of parts by weight summing to 100 parts by weight, and n is an integer of from 2 to 8, and the blocks A account for from 10 to 80 parts by weight of the block copolymer and the center X is formed by coupling with a polyfunctional coupling agent via the blocks B.

2. A thermoplastic molding material as claimed in claim 1, which contains a block polymer of the formula $(AB-)_nX$, where the blocks A are composed of styrene, α-methylstyrene, o- and/or p-methylstyrene, o- and/or p-tert.-butylstyrene or a mixture thereof and the blocks B are hydrogenated random copolymers consisting of from 5 to 30 parts by weight of styrene, α-methylstyrene, o- and/or p-methylstyrene, o- and/or p-tert.-butylstyrene or a mixture thereof and from 95 to 70 parts by weight of butadiene, isoprene and/or pentadiene or a mixture thereof, the numbers of parts by weight summing to 100 and the A blocks together accounting for from 10 to 80 parts by weight of the block polymer.

3. A thermoplastic molding material as claimed in claim 1, which contains a block polymer of the formula where n may be from 3 to 8 and the blocks A account for from 20 to 80 parts by weight of the block polymer.

4. A thermoplastic molding material as claimed in claim 1, wherein not less than 95% of all monoolefinically unsaturated double bonds originally present in the block polymer are hydrogenated.

5. A thermoplastic molding material as claimed in claim 1, wherein, in the block polymer, not less than 95% of the monoolefinically unsaturated double bonds are hydrogenated and the double bonds derived from the vinyl-aromatic monomers are not hydrogenated.

6. A thermoplastic molding material as claimed in claim 1, wherein not more than 40 parts by weight of one or more ethylenically unsaturated monomers selected from the group consisting of the alkyl (meth)acrylates where the alkyl radical is of 1 to 4 carbon atoms are grafted onto the block B.

7. A thermoplastic molding material as claimed in claim 1, wherein the block polymer is a linear (AB-)X block polymer containing from 10 to 80% by weight of blocks A which consist of styrene and/or p-methylstyrene and from 90 to 20% by weight of hydrogenated blocks B in which the comonomers are randomly distributed, and from 10 to 25% by weight of styrene and/or p-methylstyrene and from 90 to 75% by weight of butadiene and/or isoprene are present as monomeric building blocks.

8. A thermoplastic molding material as claimed in claim 1, wherein the block polymer is a hydrogenated star polymer having a center X from which three linear AB block polymer chains, coupled by B, extend outward and in which the blocks A are composed of styrene and/or p-methylstyrene and the blocks B are hydrogenated random copolymers, in which from 10 to 25% by weight of styrene and/or p-methylstyrene and from 90 to 75% by weight of butadiene and/or isoprene are present as monomeric building blocks, and the blocks A and B have a weight ratio of from 6:2 to 1:6.

9. A thermoplastic molding material as claimed in claim 1, wherein further polymers miscible with the matrix polymer are also present.

12

10. A thermoplastic molding material as claimed in claim 1, wherein styrene/maleic anhydride copolymers, styrene/acrylonitrile copolymers, styrene/alkyl (meth)acrylate copolymers having $C_1$—$C_4$-alkyl radicals, styrene/(meth)acrylic acid copolymers, polyether imide polymers, polyamides or polyacrylates are present as further polymers compatible with the matrix polymer.

11. A thermoplastic molding material as claimed in claim 1 or 2 or 3 or 4 or 5 or 6, wherein fire-retardant agents selected from the group consisting of the aromatic phosphates and phosphine oxides may additionally be present.

12. A thermoplastic molding material as claimed in claim 1 or 2 or 3 or 4 or 5 or 6, wherein a glass fiber reinforcing filler is additionally present in an amount having a reinforcing effect.

13. A thermoplastic molding material as claimed in claim 1 or 2 or 3 or 4 or 5 or 6, wherein mineral fillers are additionally present.